# EUROPEAN PATENT APPLICATION

(11) **EP 1 587 089 A1**
(43) Date of publication of application: **19.10.2005**
(21) Application number: 05300209.3
(22) Date of filing: 23.03.2005
(51) Int. Cl.: G11B 7/125

(54) **Method for determining the optimum writing power**

(30) Priority: 15.04.2004 EP 04008968
(71) Applicant: Thomson Licensing, 92100 Boulogne Billancourt (FR)
(72) Inventor: Reiner, Gerhard, 78073 Bad Dürrheim (DE)
(74) Representative: Thies, Stephan

(57) **Abstract**

The invention relates to a method for determining the optimum writing power in a device for writing to optical recording media (1), which has the following steps of:
in response to a write command, ascertaining a region (4) of the optical recording medium (1) that is to be used for a test writing operation,
performing the test writing operation in the region (4) ascertained,
ascertaining the optimum writing power on the basis of the data written in the test writing operation.

It is an object of the invention to improve a method of this type to the effect that it can be performed in a shorter time on average.

According to the invention, in order to ascertain the region (4) provided for a test writing operation, a jump (S21, S31) is made from an outer region of the optical recording medium (1) inward, a check is made during the end phase (S22, S32) of this jump (S22, S32) to establish whether a signal (RECD, RF) indicating recordings present is present and the jump (S22, S23) is terminated in the case where said signal (RECD, RF) fails to appear, and the information obtained from the optical recording medium (1) at the end of said jump (S22, S32) is utilized for ascertaining the region (4) sought.

## Description

The present invention relates to a method for determining the optimum writing power in a device for writing to optical recording media. In general, a method of this type has the following steps: in response to a write command, a region of the optical recording medium is ascertained which is to be used for a test writing operation. This region lies in a region generally provided for test writing operations and generally adjoins the region in which the preceding test writing operation was performed. The test writing operation, which usually uses higher and lower writing powers that are gradated on the basis of an average power suitable for the respective device and the type of optical recording medium, is carried out in the region ascertained. The optimum writing power is subsequently ascertained on the basis of the data written in the test writing operation. For this purpose, the data written are examined in respect of the power level at which optimum readability was obtained, and the power corresponding to this level is used further as the optimum writing power.

It is an object of the invention to improve a method of this type to the effect that it can be performed in a shorter time on average.

According to the invention, it is provided for this purpose that, in order to ascertain the region to be used for a test writing operation, a jump is effected from the present position in the direction of the region provided for test writing operations, in general from an outer region of the optical recording medium inward and a check is made at least during the end phase of said jump to establish whether a signal indicating recordings present is present. The jump is terminated in the case when said signal fails to appear, and the information obtained from the optical recording medium at the end of said jump is utilized for ascertaining the sought region to be used for the test writing operation. The process of checking for a signal indicating recordings present can either be carried out throughout the jump, but in general it suffices to carry this out only in the end phase of the jump, advantageously starting from a known radius from which the region of interest of the optical recording medium begins. The absence of said signal indicating recordings present indicates the beginning of the data which contain the information sought about the region to be used for the test writing operation. This is, by way of example, the address of the region sought, or an item of information from which the address of the region sought is calculated or the like. One advantage of this method is that a faster determination of the optimum writing power is made possible since the address information to be used for the test writing operation is ascertained rapidly. Usually, a jump is made beyond the leading end of the region that has already been written to and then this region is approached slowly, following the track.

The invention provides the jump to be ended in a region of the optical recording medium in which information about the region to be used for the test writing operation is present. This has the advantage that that part of said region which has actually been written to is immediately reached, and the required information can be immediately ascertained. The corresponding location can be reliably identified since a region with information about the region to be used for the test writing operation has generally already been written to with an optimized writing power, and can therefore be read well. From there, after the corresponding information has been ascertained, a jump is made directly to the region to be used for the test writing operation. A jump of this type is temporally of the order of magnitude of 10-20 ms.

In an advantageous manner, the jump is ended in a region of the optical recording medium which is provided for test writing operations. This has the advantage that in this case the region to be used for test writing operations is reached even more rapidly since there is no need for a further jump from a region containing information to the region to be used for the test writing operation. In general, it can be reliably identified in this case, too, where the test writing operation has to begin, although items of information written in poorly readable fashion in part are present in the region provided for test writing operations, in which, after all, non-optimum writing powers are indeed also used.

The invention provides for the jump to be terminated only after the signal indicating recordings present has failed to appear for a predetermined time. This has the advantage of ensuring that the test writing operation is not performed on regions of the optical recording medium that have already been written to in earlier test writing operations. Since data are also written with an optimum power during each test writing operation, at least a part of this region can be identified and can thus be assigned unambiguously.

In an advantageous manner, after the optimum writing power has been ascertained, it is stored with an identification characteristic of the respective device in a predefined region of the optical recording medium. This has the advantage that the optimum writing power ascertained can be used, if appropriate, as a start value for the next test writing operation. In this case, provision is made for performing the test writing operation in relatively small step sizes from this start value, which is already known to be well suited to the optical recording medium, and thus to attain a further optimized result for the optimum writing power. One is thus more central within the permissible tolerance range, which increases the readability of the written data, even in the event of temperature fluctuations and ageing phenomena. Even in the case where the optimum writing power is determined erroneously, it thus becomes possible alternatively to use the optimum writing power value stored last in each case as a replacement value.

In an advantageous manner, the predefined region in which the value of the optimum writing power ascertained is stored is a region provided for information about the region to be used for a test writing operation. This has the advantage that this region, which often contains only "dummy data", so-called dummies, has practical information written to it.

The invention also relates to a device for carrying out the method according to the invention.

The method according to the invention is suitable for devices which operate in accordance with the DVD+R standard (ECMA-349). However, the method according to the invention can also be expediently applied in devices which operate in accordance with other optical recording standards.

Further advantages of the invention and details in accordance with the invention can be gathered from the following description of an exemplary embodiment.

### In the figures:

- Fig. 1: shows a first method for determining the optimum writing power,

- Fig. 2: shows a method according to the invention, and
- Fig. 3: shows a further method according to the invention.

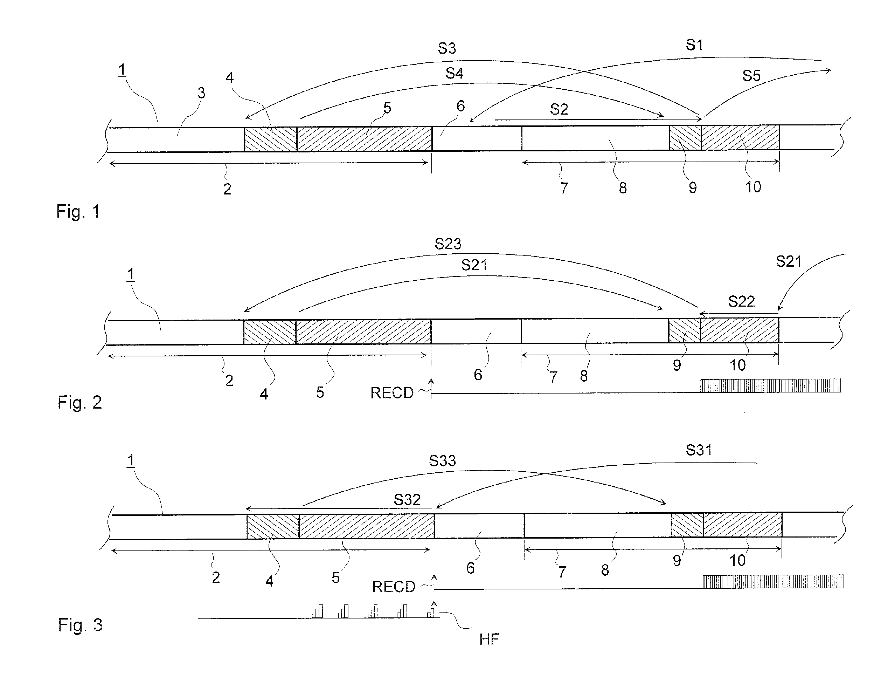

Fig. 1 shows a first method for determining the optimum writing power in a device for writing to optical recording media. A cross section through a part of an optical recording medium 1 is illustrated with various regions. In the illustration on the left, it goes to the inner region of the optical recording medium 1, and in the illustration on the right, it goes in the direction of the outer region of the optical recording medium 1. The left-hand region of the figure illustrates a region 2 provided for test writing operations, which has a region 3 that has not been written to, a region 4 to be used for the next test writing operation, and a region 5 that has already been written to by test writing operations. The region 2 provided for test writing operations is adjoined by a start region 6 for a region 7 containing information about the region to be used for the test writing operation. The region 7 also has a region 8 that has not been written to, a region 9 provided for information about the next test writing operation, and a region 10 that has already been written to. In accordance with the DVD+R standard, the region 2 provided for test writing operations is referred to as "Inner Disk Test Zone", the start region 6 is referred to as "Count Zone Run-in" and the region 7 provided with information about the regions to be used for test writing operations is referred to as "Inner Disk Count Zone".

In a first jump S1 illustrated by an arrow, a jump is made from an outer region of the optical recording medium into the start region 6, where coupling in onto the track of the optical recording medium is effected and the track is followed during a second jump S2, likewise illustrated by an arrow, over the region 8 that has not been written to and the adjoining region 9 up to the region 10 that has been written to. Jump S1 and jump S2 are advantageously a fast and a slow part of a single jump. In the region 10 that has been written to, the information about the region to be used for the next test writing operation is obtained and a jump is made to this region 4 in the jump S3. The next test writing operation is performed in the region 4 to be used for the next test writing operation, and, at the end of said operation, a jump is made in the jump S4 to the beginning of the region 9 provided for information about the next test writing operation, in order to write to this region 9. According to the invention, the optimum value of the writing power that has been ascertained during the test writing operation is stored in this case instead of so-called dummy information. In this case, this value is used as a start value in the next process of determining the optimum writing power. Afterward, in the jump S5, a jump is made to that location of the optical recording medium at which the recording is to be effected.

Fig. 2 shows a method according to the invention on the basis of an optical recording medium 1 illustrated schematically in partial cross section as for Fig. 1. Identical elements are provided with identical reference symbols and will not necessarily be mentioned again here. A signal RECD can be seen in the lower region of the figure, which signal indicates the presence of recordings. It is, for example, a radiofrequency or RF signal that is familiar to the person skilled in the art. It is present during the first part of the jump, jump S21, from an outer region of the optical recording medium 1 in the direction of the inner region thereof, and also in the second part of the jump, jump S22. The jump S22 is illustrated as a slow jump, for example as a jump from track to track.

During this jump from track to track, the region 10 that has been written to is crossed and it is established at the inner end thereof that a signal RECD is no longer present. The jump S22 is thereupon ended immediately, the information lying at the beginning of the region 10 that has been written to is ascertained, and the start address of the region 4 to be used for the next test writing operation is determined therefrom. A jump is made to said region in the jump S23 in order to write to the region 4 to be used for the next test writing operation. Afterward, as described for Fig. 1, a jump is made in the jump S24 to the beginning of the region 9 provided for information about the next test writing operation, in order to correspondingly write to said region.

Fig. 3 shows a further method according to the invention. In this case, a jump is made, in the jump S31, from an outer region of the optical recording medium across the region 7 rapidly to the boundary between the region 2 provided for test writing operations and the start region 6 and, in the second part of this jump, the jump S32, a jump is made slowly from there in the direction of the inner region of the optical recording medium. In this case, too, a signal RF is read from the optical recording medium, which signal fluctuates in its intensity and has a maximum where the optimum writing power was applied in preceding test writing operations. After the last occurrence of one of said maxima, the jump S32 is continued for a predetermined time, for example 10 to 20 ms, and then ended. Afterward, coupling in onto the track of the optical recording medium 1 is effected and the region 4 to be used for the next test writing operation is written to. A jump is made from there, in the jump S33, to the region 9 in order to write to the latter, as specified above.

In other words, the invention relates to an optimum writing power setting. In the case of a setting of this type, the optimum power is ascertained for a specific combination of optical recording medium 1, also referred to as disk, and drive by increasing the writing laser power step by step. The invention principally relates to write-once media such as e.g. DVD+R. In the case of the latter, a calibration zone, region 4, which can be used for writing attempts is situated in the lead-in region of the disk (inner region of the disk). Adjoining said zone, region 4, there is a so-called inner disk count zone, region 7, which notes which region of the (write-once) calibration zone, region 4, has already been used and is thus no longer available. The next possible position is then ascertained for a calibration by the drive. This is done e.g. by the scanning beam of the device being positioned at the start of the count zone, region 7, and waiting continuously on the track until the marking sought, the region 10, has been reached by detection of a signal RECD on the track. The actual start address for the calibration is then ascertained by address conversions, as is described, e.g. in the standard. This method has the disadvantage that, at low writing speeds such as are still used in consumer devices, in the worst-case scenario a great deal of time may elapse before the correct position is found. At 1 x DVD speed, this time is up to 256*24ms = 6.1 seconds. This means that more than six seconds may elapse from pressing the record button until the recording actually starts, which may be unacceptable.

The invention likewise makes use of the detection of a signal RECD. In this case, however, the count zone run-in described in the standard, the region 6, is not used as a basis, rather, during the return jump S21, S22, S31, S32 from a disk position located further outward, the RECD signal or the RF signal is scanned and, in the case where the signal fails to appear, the jump S22, S32 is immediately terminated and the position for the calibration is ascertained by ascertaining the associated address. The invention reduces the time that elapses for carrying out the ascertaining of the optimum writing power, and thus the time that elapses between pressing the record button and the actual start of recording.

A further point of the invention is that the region 7 or some other suitable data region which is permitted to be written to arbitrarily according to the standard is utilized for storing there the value for the writing laser power that has been ascertained and found to be good. Said value is then provided with an identifier of the drive used, since every drive will ascertain a different value for the optimum writing power on account of different optics. The stored value for a given disk/drive combination can nevertheless produce a better start value for further calibrations than is afforded by a default value from a table provided as standard. If the power calibration goes wrong, the stored value can also be used directly for the actual writing operation.

A further advantage of the invention is that carrying out the writing power optimization each time the optical recording medium 1 is inserted is avoided. Although such a procedure reduces the required time between recording command and start of recording since the optimum value of the writing power is after all already known, it nonetheless has the major disadvantage of unnecessarily writing to the regions 4 and 7 of the optical recording medium 1, even when an optical recording medium 1 is inserted into the device only for the purpose of reading, that is to say that a setting of the optimum writing power is not even necessary. This is disadvantageous particularly in the case of only write-once optical recording media since writing is not possible correctly if a region that has not been written to is no longer present in the regions 4, 7 required for the setting of the optimum writing power.

## Claims

1. A method for determining the optimum writing power in a device for writing to optical recording media (1) having the steps of:
- in response to a write command, ascertaining a region (4) of the optical recording medium (1) that is to be used for a test writing operation,
- performing the test writing operation in the region (4) ascertained,
- ascertaining the optimum writing power on the basis of the data written in the test writing operation,
**wherein**, in order to ascertain the region (4) provided for a test writing operation, a jump (S21, S22; S31, S32) is made from an outer region of the optical recording medium (1) inward, a check is made during the end phase (S22, S32) of this jump to establish whether a signal (RECD, RF) indicating recordings present is present and the jump (S22, S32) is terminated in the case where said signal (RECD, RF) fails to appear, and the information obtained from the optical recording medium (1) at the end of said jump (S22, S32) is utilized for ascertaining the region (4) sought.

2. The method as claimed in claim 1, **wherein** the jump (S22) is ended in a region (7) of the optical recording medium (1) in which information about the region (4) to be used for the test writing operation is present.

3. The method as claimed in claim 1, **wherein** the jump (S32) is ended in a region (2) of the optical recording medium (1) which is provided for test writing operations.

4. The method as claimed in claim 3, **wherein** the jump (S32) is terminated only after the signal (RF) indicating recordings present has failed to appear for a predetermined time.

5. The method as claimed in one of the preceding claims, **wherein**, after the optimum writing power has been ascertained, it is stored with a device identification in a predefined region of the optical recording medium (1).

6. The method as claimed in claim 5, **wherein** the predefined region is a region (7) provided for information with respect to the region (4) to be used for a test writing operation.

7. A device for carrying out the method as claimed in one of the method claims.
